(19) Europäisches Patentamt / European Patent Office / Office européen des brevets

(11) **EP 3 076 511 B1**

(12) **EUROPEAN PATENT SPECIFICATION**

(45) Date of publication and mention of the grant of the patent:
**05.05.2021 Bulletin 2021/18**

(51) Int Cl.:
*H02J 3/00* (2006.01)  *H02J 3/04* (2006.01)

(21) Application number: **14864751.4**

(86) International application number:
**PCT/CN2014/092202**

(22) Date of filing: **25.11.2014**

(87) International publication number:
**WO 2015/074624 (28.05.2015 Gazette 2015/21)**

(54) **POWER TRANSMISSION SYSTEM FOR IMPROVING TRANSMISSION CAPACITY OF URBAN POWER GRID THROUGH NON-SINE ALTERNATING CURRENT POWER TRANSMISSION**

STROMÜBERTRAGUNGSSYSTEM ZUR VERBESSERUNG DER ÜBERTRAGUNGSKAPAZITÄT EINES STÄDTISCHEN STROMNETZES DURCH NICHT-SINUS-WECHSELSTROMÜBERTRAGUNG

SYSTÈME DE TRANSMISSION D'ÉNERGIE DESTINÉ À AMÉLIORER LA CAPACITÉ DE TRANSMISSION D'UN RÉSEAU ÉLECTRIQUE URBAIN PAR TRANSMISSION D'UN COURANT ALTERNATIF NON SINUSOÏDAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2013 CN 201310606681**

(43) Date of publication of application:
**05.10.2016 Bulletin 2016/40**

(73) Proprietors:
- **State Grid Corporation of China**
  **Beijing 100031 (CN)**
- **State Grid Smart Grid Research Institute**
  **Beijing 102211 (CN)**
- **State Grid Liaoning Electric Power Company Ltd.**
  **Shenyang, Liaoning 110006 (CN)**
- **State Grid Liaoning Economic Technique Institute**
  **Shenhe District**
  **Shengang**
  **Liaoning 110015 (CN)**

(72) Inventors:
- **JING, Ping**
  **Beijing 102211 (CN)**
- **ZHOU, Fei**
  **Beijing 102211 (CN)**
- **YU, Hongyang**
  **Beijing 102211 (CN)**
- **GE, Weichun**
  **Beijing 102211 (CN)**
- **LIU, Jian**
  **Beijing 102211 (CN)**

(74) Representative: **Vidon Brevets & Stratégie**
  **16B, rue de Jouanet**
  **BP 90333**
  **35703 Rennes Cedex 7 (FR)**

(56) References cited:
CN-A- 101 512 865    CN-A- 102 738 820
CN-A- 103 219 738    CN-A- 103 606 917
CN-B- 102 738 819    CN-B- 102 738 820
US-B1- 6 255 806    US-B1- 6 714 427

- **BARTHOLD, L.O. ET AL.: 'Conversion of AC Transmission Lines to HVDC Using Current Modulation' IEEE PES 2005 CONFERENCE AND EXPOSITION IN AFRICA 15 July 2005, pages 26 - 32, XP055345633**

**Description**

**Field of the Invention**

The present invention relates to a power transmission system for improving the capacity of a non-sinusoidal alternating current transmission in an urban power grid.

**Background of the Invention**

In recent years, as urbanization development in China is further accelerated, the urban power load is increasing, the scale and the transmission capacity of power grids are objectively required to keep sustainable development, but the present urban power grids universally have the following problems.

With the increase of urban power load, the transmission capacity of alternating current lines is insufficient, and line corridors are deficient. The transmission capacity of heavy-load alternating current lines cannot be greatly improved by adding FACTS (Flexible Alternating Current Transmission System) devices, while newly-built lines encounter increasingly high resistance, and particularly, town-going line projects are hardly supported on the aspects of land requisition and environmental protection.

As the structures of urban power grids are increasingly close, the problem of short-circuit current is obvious. The urban power grids develop quickly, the power grid lines interweave with one another tightly, and the equivalent impedance is low, so that the short-circuit current level of the power grids is high. If the problem of insufficient power supply of urban power grids is solved by adopting newly-built alternating current lines, the power grids may be closer, and the equivalent impedance may be further reduced, so that the short-circuit current is increased to influence safe operation of the power grids.

The reactive power voltage regulation of urban power grids is increasingly difficult, and the voltage stability cannot be ignored. Cable lines in the urban power grids are increasing, the land for urban transformer substations is limited, the perceptual reactive power configuration is generally deficient, the reactive power voltage regulation becomes more and more difficult, and the situation of over high voltage at the low valley load of the power grids is serious. In addition, the air-conditioner load and motor load proportions in the urban power grids are high. Since the quick dynamic reactive power regulation capacity is insufficient, the voltage stability problem at the peak load of the power grids is gradually obvious.

Based on the above problems, it is necessary to research new technical means for sufficiently exerting the power transmission potential of existing line corridors and preventing the problems of short-circuit current over-limitation, insufficient dynamic reactive power support and the like.

In view of power transmission lines, insulation endurance is the main factor restricting the transmission capacity of alternating current lines. At present, the insulation of an alternating current system is designed according to the voltage peak, but the transmission capacity is determined by a voltage effective value and is merely 71% of the peak. Researches show that when an alternating current line runs in a direct current mode, the direct current insulating strength of the alternating current line is nearly 2-3 times the alternating current voltage or higher due to the difference on electric field distribution, heating condition and the like inside an insulating layer. In addition, the capacitances of cable lines are much higher than those of overhead lines, if an alternating current power transmission mode is adopted and when the lengths of cables exceed a certain value (e.g., 40-60km), the capacitance current may occupy all effective load capacity of cable cores, but if a direct current power transmission mode is adopted, the steady-state capacitance current is merely caused by the ripple voltage and is very low, so that the power transmission lengths of cables are hardly restricted by the capacitance current.

The researches on direct current conversion of alternating current lines get wide attention of domestic and foreign research institutions in recent years. ABB Company put forward a scheme of reforming a three-phase alternating current line for flexible direct current power transmission, wherein a third polar lead is periodically connected to a first polar lead or a second polar lead by adopting an additional phase branch to conduct current, but the line loss cannot be uniformly distributed among the three leads. With the increase of a load, the first and second polar leads reach thermal stability limits first in this scheme, so the thermal stability limit of the third polar lead cannot be sufficiently utilized. Moreover, the scheme cannot be applied to reform of alternating current cable lines, because the space charge accumulation of the alternating current cable lines under the working condition of direct current is serious and the electric field intensity in insulators after long-time voltage application can be increased to 7-9 times the initial value. The space charge problem is not considered when alternating current cables in practical operation are researched, so after the alternating current cable lines are converted to direct current operation, space charges may lead to electric field distortion and even breakdown of cable insulators in severe cases.

Patent document CN 102738820B has disclosed a power transmission system for improving the transmission capability of an alternating-current circuit through using a voltage source current converting technology. Patent document CN 103219738A has disclosed a direct current transmission system based on a three-pole type structure. Patent document CN 102738819B has disclosed a power transmission system for improving the transmission capability of an alternating-current circuit through using a mixed current converting technology.

## Summary of the Invention

According to the invention, a power transmission system for improving the capacity of a non-sinusoidal alternating current transmission in an urban power grid is provided having the features of independent claim 1. Preferred embodiments of the invention are subject-matter of the dependent claims.

In order to overcome the above defects of the prior art, the present invention provides a power transmission system for improving the transmission capacity of an urban power grid by adopting non-sinusoidal alternating current transmission, which well solves the problem about reformation of capacity expansion of an alternating current line by using the bidirectional current conductivity of voltage source current converters under the coordination of switch handover devices, without improving the short-circuit current level of the power grid. The power transmission system has transient functions such as dynamic reactive power compensation, and therefore is significant for solving the contradiction between increase of large urban loads and increasing difficulty of new line construction.

Compared with the prior art, the present invention has the following advantages:

1, the power transmission system provided by the present invention, for improving the transmission capacity of an urban power grid in a non-sinusoidal alternating current transmission mode taking alternating square wave as a main feature can well solve the problem about reformation of capacity expansion of a three-phase alternating current line, particularly an embedded alternating current cable line;

2, the power transmission system provided by the present invention, for improving the transmission capacity of an urban power grid in a non-sinusoidal alternating current transmission mode taking alternating square wave as a main feature can maximize the transmission power of an original power transmission line, and does not destroy the insulating property of an alternating current cable line, thus avoiding accumulation of space charges of the alternating current cable line;

3, the power transmission system provided by the present invention, for improving the transmission capacity of an urban power grid in a non-sinusoidal alternating current transmission mode taking alternating square wave as a main feature has the functions of reactive power compensation, harmonic suppression and the like by adopting voltage source converters; and

4, the power transmission system provided by the present invention, for improving the transmission capacity of an urban power grid in a non-sinusoidal alternating current transmission mode taking alternating square wave as a main feature is applied to the occasions of reformation of three-phase alternating current overhead lines or three-phase alternating current cable power transmission systems, and significantly improves the operational flexibility and reliability without improving the short-circuit level of the power grid.

## Brief Description of the Drawings

Fig. 1 is a schematic diagram of current and voltage changes of each polar lead in an operating mode I of a power transmission system in an embodiment of the present invention;

Fig. 2 is a topological structure diagram of a power transmission system for improving the transmission capacity of an urban power grid in a non-sinusoidal alternating current transmission mode taking alternating square wave as a main feature in an embodiment of the present invention;

Fig. 3 is a functional schematic diagram of switch handover devices in an embodiment of the present invention;

Fig. 4 is an implementation scheme diagram of the switch handover devices in an embodiment of the present invention;

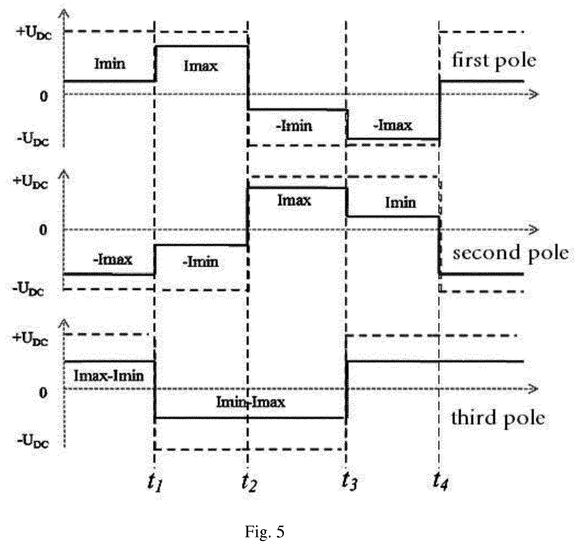

Fig. 5 is a schematic diagram of current and voltage changes of each polar lead in an operating mode II of the power transmission system in an embodiment of the present invention.

## Detailed Description of the Embodiments

The present invention will be described in detail below in combination with the accompanying drawings.

The present invention provides a power transmission system for improving the transmission capacity of an urban power grid by adopting non-sinusoidal alternating current transmission. The power transmission system takes a half-bridge modular cascade multi-level series technology as a main feature, and adopts a novel connection form formed by three polar leads, current handover devices at two ends of each lead and half-bridge modular cascade voltage converters.

The system includes a first waveform conversion system and a third waveform conversion system for converting sine wave into alternating square wave, and a second waveform conversion system and a fourth waveform conversion system for converting alternating square wave into sine wave; the first waveform conversion system is connected with the second waveform conversion system via a first polar lead and a second polar lead which are parallel to each other; and the third waveform conversion system is connected with the fourth waveform conversion system via a third polar lead.

The first waveform conversion system includes an alternating current transformer, a positive polar voltage converter, a negative polar voltage converter and a switch handover device; a first alternating current system is connected with the input end of the positive polar voltage converter via the alternating current transformer, the positive electrode of a direct current clamping capacitor of the positive polar voltage converter is connected with the input end of the switch handover device, while the negative electrode of the direct current clamping capacitor is grounded; the negative electrode of a direct current clamping capacitor of the negative polar voltage converter is connected with the input end of the switch handover device, while the positive electrode of the direct current clamping capacitor is grounded; and the output ends of the positive polar voltage converter and the negative polar voltage converter are separately connected with a switch handover device of the second waveform conversion system via the first polar lead and the second polar lead.

The second waveform conversion system includes the switch handover device, a positive polar voltage converter, a negative polar voltage converter and an alternating current transformer; the positive electrode of a direct current clamping capacitor of the positive polar voltage converter is connected with the output end of the switch handover device, while the negative electrode of the direct current clamping capacitor is grounded; the negative electrode of a direct current clamping capacitor of the negative polar voltage converter is connected with the output end of the switch handover device, while the positive electrode of the direct current clamping capacitor is grounded; and the output ends of the positive polar voltage converter and the negative polar voltage converter are separately connected with a second alternating current system via the alternating current transformer.

The third waveform conversion system includes an alternating current transformer, a third polar voltage converter and a switch handover device; the first alternating current system is connected with the input end of the third polar voltage converter via the alternating current transformer, the positive electrode of a direct current clamping capacitor of the third polar voltage converter is connected with the input end of the switch handover device, and the output end of the third polar voltage converter is connected with a switch handover device of the fourth waveform conversion system via the third polar lead.

The fourth waveform conversion system includes the switch handover device, a fourth polar voltage converter and an alternating current transformer; the positive electrode of a direct current clamping capacitor of the fourth polar voltage converter is connected with the output end of the switch handover device, and the output end of the fourth polar voltage converter is connected with the second alternating current system via the alternating current transformer.

The first polar lead, the second polar lead and the third polar lead are all overhead lines or cable lines.

The switch handover devices are thyristor fling-cut switches or switch devices based on turn-off power electronic devices. The voltage of the third polar lead is changed periodically in the form of alternating square wave by controlling the periodic on/off of the upper bridge arm or the lower bridge arm of the switch handover device.

The power transmission system structure sufficiently utilizes three polar leads to transmit power, the voltages of the first polar lead and the second polar lead are unchanged, the direction of the current flowing through the first polar lead and the second polar lead is unchanged, and the amplitude of the current is changed periodically and alternated between the maximum and the minimum. The voltage of the third polar lead is changed periodically, the third polar lead is parallel to the first polar lead or the second polar lead all the time and shares forward or reverse current together with them, but the amplitude of the current flowing through the third polar lead is unchanged.

The positive polar voltage converters, the negative polar voltage converters and the third and fourth polar voltage converters are voltage converters based on turn-off power electronic devices.

According to the practical situation of the power grid, in the line flow direction, the second waveform conversion system and the fourth waveform conversion system convert sine wave into alternating square wave, and the first waveform conversion system and the third waveform conversion system convert alternating square wave into sine wave, thus completing power transmission from the second alternating current system to the first alternating current system.

The working principle of the power transmission system for improving the transmission capacity of an urban power grid in a non-sinusoidal alternating current transmission mode taking alternating square wave as a main feature is as follows:

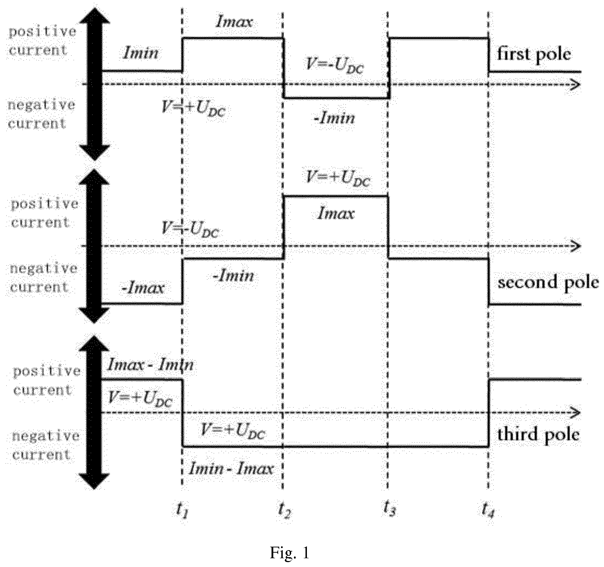

As shown in Fig. 1, the transmitted power of the direct current system can be improved under the same heating limit by periodically changing the magnitude of the current of the three polar leads. The polarities of the voltage and the current of the three polar leads are periodically changed to realize voltage polarity reversal of the first polar lead and the second polar lead, avoid accumulation of space charges and simultaneously realize periodic sharing of the third polar lead on the current of the first or second polar lead. The magnitude of the current of the first or second polar lead is periodically

changed between $I_{max}$ and $I_{min}$, and the direction of the current is changed along with the change of the lead voltage; the magnitude of the current of the third polar lead is unchanged and is $I_{max}$-$I_{min}$ all the time, and the direction of the current is also changed along with the change of the lead voltage.

The heating limits of the first, second and third polar leads are the same, and it is supposed that a thermal stability limit current is $I_N$ = 1.0pu. In order that the third polar lead reaches the heating limit, it should satisfy:

$$I_{max} - I_{min} = I_N = 1.0\text{pu} \qquad (1)$$

The current of the first polar lead or the second polar lead is changed between the maximum current $I_{max}$ and the minimum current $I_{min}$, and the effective value of the current within a cycle should reach the heating limit likewise, to ensure that the transmitted power of the three polar leads each reaches the thermal stability limit. Specifically, it shows in Fig. 1, the current effective values of the first polar lead, the second polar lead and the third polar lead are equal within the time of 0 to $t_4$, so it should satisfy:

$$I_{max}^2 + I_{min}^2 = 2(I_{max} - I_{min})^2 \qquad (2)$$

Based on the above condition, the operating current $I_{max}$ of the first polar lead or the second polar lead is 1.37$I_N$, and $I_{min}$ is 0.37 $I_N$.

Operating mode I:

When the first polar lead is connected parallel to the third polar lead, the voltage is +$U_{DC}$, and when forward maximum current $I_{max}$ passes, the working voltage of the second polar lead is -$U_{DC}$, and reverse maximum current -$I_{max}$ passes; at the moment $t_1$, the polarity of the working voltage of the first polar lead is unchanged, but the current is changed into the forward maximum current $I_{max}$, then the second polar lead is parallel to the third polar lead and the both share the reverse maximum current -$I_{max}$, and the polarity of the third polar lead is reversed; at the moment $t_2$, the voltage of the first polar lead is reversed, the first polar lead is parallel to the third polar lead and the both work at the reverse maximum current -$I_{max}$, the voltage of the second polar lead is also reversed, and the second polar lead works at the forward maximum current $I_{max}$; at the moment $t_3$, the voltage of the first polar lead is reversed, the forward maximum current $I_{max}$ passes through the first polar lead, the voltage of the second polar lead is reversed, the second polar lead is parallel to the third polar lead and the both work at the reverse maximum current -$I_{max}$; and at the moment $t_4$, the voltage of the third polar lead is reversed and restored to the initial state. Alternating square wave transmission is realized by cyclic reversal of the operating mode.

Operating mode II:

When the first polar lead is connected parallel to the third polar lead, the voltage is +$U_{DC}$, and when forward maximum current $I_{max}$ passes, the working voltage of the second polar lead is -$U_{DC}$, and reverse maximum current -$I_{max}$ passes; at the moment $t_1$, the polarity of the working voltage of the first polar lead is unchanged, but the current is changed into the forward maximum current $I_{max}$, then the second polar lead is parallel to the third polar lead and the both share the reverse maximum current -$I_{max}$, and the polarity of the third polar lead is reversed; at the moment $t_2$, the voltage of the first polar lead is reversed, the first polar lead is parallel to the third polar lead and the both work at the reverse maximum current -$I_{max}$, the voltage of the second polar lead is also reversed, and the second polar lead works at the forward maximum current $I_{max}$; at the moment $t_3$, the polarity of the working voltage of the first polar lead is unchanged, but the current is changed into the reverse maximum current -$I_{max}$, the second polar lead is parallel to the third polar lead and the both work at the forward maximum current $I_{max}$; and at the moment $t_4$, the voltages of the first polar lead and the second polar lead are reversed, the first polar lead is parallel to the third polar lead and the both are restored to the initial state. Alternating square wave transmission is realized by cyclic reversal of the operating mode.

Embodiment 1

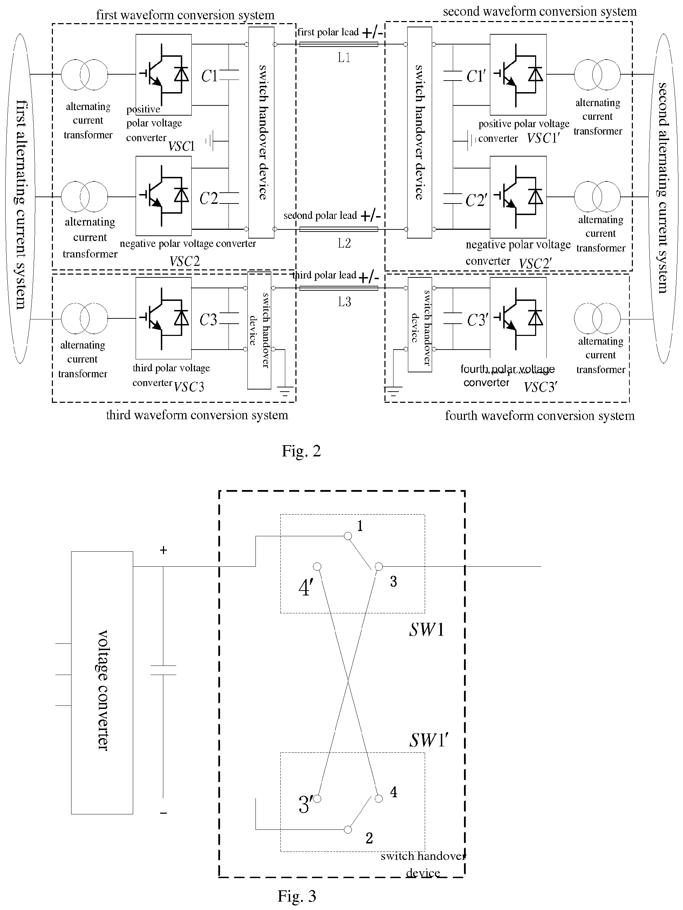

Fig. 2 shows a topological structure diagram of the power transmission system for improving the transmission capacity of an urban power grid in a non-sinusoidal alternating current transmission mode taking alternating square wave as a main feature. The system includes a first polar lead L1, a second polar lead L2, a third polar lead L3, four switch handover devices, voltage converters *VSC*1, *VSC*1', *VSC*2, *VSC*2', *VSC*3 and *VSC*3', direct current clamping capacitors *C*1, *C*1', *C*2, *C*2', *C*3 and *C*3' of the voltage converters, a first alternating current system and a second alternating current system.

Two ends of the first polar lead L1 are connected with the upper ports of the switch handover devices, the other upper ports of the switch handover devices are connected with the positive electrodes of the direct current clamping capacitors *C*1 and *C*1', two ends of the second polar lead L2 are connected with the lower ports of the switch handover devices, the other lower ports of the switch handover devices are connected with the negative electrodes of the direct current clamping capacitors *C*2 and *C*2', and the negative electrodes of *C*1 and *C*1' and the positive electrodes of *C*2 and *C*2' are grounded; two ends of the third polar lead L3 are connected with the switch handover devices, then the switch handover devices are connected with the positive electrodes of the direct current clamping capacitors *C*3 and *C*3', and the negative electrodes of *C*3 and *C*3' are grounded.

The alternating current sides of the three head voltage converters *VSC*1, *VSC*2 and *VSC*3 at the head are separately connected in parallel to the same bus or different buses of the alternating current system via converter transformers or reactors.

The alternating current sides of the three tail voltage converters *VSC*1', *VSC*2' and *VSC*3' at the tail are separately connected in parallel to the same bus or different buses of the alternating current system via converter transformers or reactors.

The switch handover devices may be thyristor switches or based on turn-off power electronic devices. The functional schematic diagram of the switch handover devices is as shown in Fig. 3, bilateral switches *SW*1 and *SW*1' can simultaneously connect a node 1 with a node 3 and connect a node 2 with a node 4, taking the third polar lead as an example, so that as shown in Fig. 2, the positive electrodes of the direct current clamping capacitors *C*3 and *C*3' are connected with the lead L3, the negative electrodes of *C*3 and *C*3' are grounded, and the voltage polarity of the third polar lead L3 is positive; or can simultaneously connect a node 1 with a node 4' and connect a node 2 with a node 3', so that as shown in Fig. 2, the negative electrodes of the direct current clamping capacitors *C*3 and *C*3' are connected with the third polar lead L3, the positive electrodes of *C*3 and *C*3' are grounded, and the voltage polarity of the third polar lead L3 is negative.

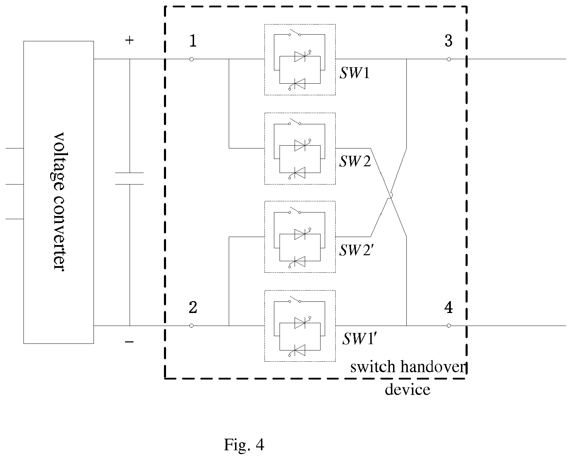

An implementation scheme of the switch handover devices is as shown in Fig. 4. Each switch handover device includes two sets of compound switches *SW*1, *SW*1', *SW*2 and *SW*2' formed by connecting two sides of a thyristor switch with high-speed mechanical switches in parallel. *SW*1 and *SW*1' are switched on to simultaneously connect a node 1 with a node 3 and connect a node 2 with a node 4, taking the third polar lead as an example, so that as shown in Fig. 2, the positive electrodes of the direct current clamping capacitors *C*3 and *C*3' are connected with the third polar lead L3, and the negative electrodes of *C*3 and *C*3' are grounded. *SW*2 and *SW*2' are switched on to simultaneously connect a node 1 with a node 4 and connect a node 2 with a node 3, so that as shown in Fig. 2, the positive electrodes of the direct current clamping capacitors *C*3 and *C*3' are grounded, and the negative electrodes of *C*3 and *C*3' are connected with the third polar lead L3.

The present invention sufficiently utilizes the bidirectional current flowing capacity of the voltage source converters, adopts the switch handover devices to realize reversal of voltage polarities of the three polar leads and change the voltage and current polarities thereof, and realizes periodic sharing of the current of the first and second polar leads on the premise that the transmitted power of the three polar leads is unchanged. By appropriate control, the transmitted power can be uniformly allocated among the three polar leads, and the current of the three polar leads can reach respective heating limit. In the power transmission system, current flows among the three polar leads and does not form a passage with the ground, so that high-frequency electromagnetic interference and corrosion of metal equipment in the ground are avoided. The transmitted power of an original alternating current line can be improved by about 60%. By adopting the voltage source conversion technology, high-capacity reactive power compensation and filter devices are not needed, dynamic voltage support and active filter functions can also be provided for an alternating current system without improving the short-circuit current level of the system, and the operational flexibility and reliability of the system can be significantly improved.

**Claims**

1. A power transmission system for improving the capacity of a non-sinusoidal alternating current transmission in an urban power grid,
   the power transmission system comprising a first waveform conversion system and a third waveform conversion system for converting a sine wave into an alternating square wave, and a second waveform conversion system and a fourth waveform conversion system for converting the alternating square wave into a sine wave,
   wherein the first waveform conversion system is connected with the second waveform conversion system via a first polar lead (L1) and a second polar lead (L2); and the third waveform conversion system is connected with the fourth waveform conversion system via a third polar lead (L3);

the power transmission system comprises a first switch handover device at a first end of the first and second polar leads (L1, L2), a second switch handover device at a second end of the first and second polar leads (L1, L2), a third switch handover device at a first end of the third polar lead (L3), and a fourth switch handover device at a second end of the third polar lead (L3), wherein the switch handover devices are thyristor fling-cut switches or switch devices based on turn-off power electronic devices configured to reverse voltage polarities of the first, second and third polar leads;

wherein the first waveform conversion system comprises an alternating current transformer, a positive polar voltage converter (VSC1), a negative polar voltage converter (VSC2) and the first switch handover device; wherein respective input ends of the positive and negative polar voltage converters (VSC1, VSC2) are adapted to be connected with a first alternating current system via the alternating current transformer;

wherein the positive electrode of a direct current clamping capacitor (C1) of the positive polar voltage converter (VSC1) is connected with a first input end of the first switch handover device, while the negative electrode of the direct current clamping capacitor (C1) of the positive polar voltage converter (VSC1) is grounded; the negative electrode of a direct current clamping capacitor (C2) of the negative polar voltage converter (VSC2) is connected with a second input end of the first switch handover device, while the positive electrode of the direct current clamping capacitor (C2) of the negative polar voltage converter (VSC2) is grounded;

and respective output ends of the positive polar voltage converter (VSC1) and the negative polar voltage converter (VSC2) are separately connected via the first switch handover device and the first and second polar leads (L1, L2) with the second switch handover device of the second waveform conversion system.

2. The power transmission system of claim 1, **characterized in that** the second waveform conversion system comprises the second switch handover device, a positive polar voltage converter (VSC1'), a negative polar voltage converter (VSC2') and an alternating current transformer; the positive electrode of a direct current clamping capacitor (C1') of the positive polar voltage converter (VSC1') is connected with a first output end of the second switch handover device, while the negative electrode of this direct current clamping capacitor (C1') is grounded; the negative electrode of a direct current clamping capacitor (C2') of the negative polar voltage converter (VSC2') is connected with a second output end of the second switch handover device, while the positive electrode of this direct current clamping capacitor (C2') is grounded; and respective output ends of the positive polar voltage converter (VSC1') and the negative polar voltage converter (VSC2') of the second waveform conversion system are arranged to be separately connected with a second alternating current system via the alternating current transformer.

3. The power transmission system of claim 1, **characterized in that** the third waveform conversion system comprises an alternating current transformer, a third polar voltage converter (VSC3) and the third switch handover device; an input end of the third polar voltage converter (VSC3) is arranged to be connected to the first alternating current system via the alternating current transformer, the positive electrode of a direct current clamping capacitor (C3) of the third polar voltage converter (VSC3) is connected with a first input end of the third switch handover device, and an output end of the third polar voltage converter (VSC3) is connected with the fourth switch handover device of the fourth waveform conversion system via the third polar lead (L3).

4. The power transmission system of claim 3, **characterized in that** the fourth waveform conversion system comprises the fourth switch handover device, a fourth polar voltage converter (VSC3') and an alternating current transformer; the positive electrode of a direct current clamping capacitor (C3') of the fourth polar voltage converter (VSC3') is connected with an output end of the fourth switch handover device, and an output end of the fourth polar voltage converter (VSC3') is arranged to be connected with the second alternating current system via the alternating current transformer.

5. The power transmission system of claim 1, **characterized in that** the first polar lead (L1), the second polar lead (L2) and the third polar lead (L3) are all overhead lines or cable lines.

6. The power transmission system of claim 4, **characterized in that** the positive polar voltage converters (VSC1 and VSC1'), the negative polar voltage converters (VSC2 and VSC2') of the first and second waveform conversion systems, and the third and fourth polar voltage converters (VSC3 and VSC3') are voltage converters based on turn-off power electronic devices.

7. The power transmission system of claim 1, **characterized in that** according to a situation of the power grid, in the line flow direction, the second waveform conversion system and the fourth waveform conversion system are configured to convert a sine wave into an alternating square wave, and the first waveform conversion system and the third waveform conversion system are configured to convert the alternating square wave into a sine wave, thus completing power transmission from the second alternating current system to the first alternating current system.

**Patentansprüche**

1. Energieübertragungssystem zur Verbesserung der Kapazität einer nicht-sinusförmigen Wechselstromübertragung in einem urbanen Stromnetz,
wobei das Energieübertragungssystem ein erstes Wellenform-Umwandlungssystem und ein drittes Wellenform-Umwandlungssystem zum Umwandeln einer Sinuswelle in eine alternierende Rechteckwelle und ein zweites Wellenform-Umwandlungssystem und ein viertes Wellenform-Umwandlungssystem zum Umwandeln der alternierenden Rechteckwelle in eine Sinuswelle umfasst,
wobei das erste Wellenform-Umwandlungssystem mit dem zweiten Wellenform-Umwandlungssystem über eine erste Polleitung (L1) und eine zweite Polleitung (L2) verbunden ist; und das dritte Wellenform-Umwandlungssystem mit dem vierten Wellenform-Umwandlungssystem über eine dritte Polleitung (L3) verbunden ist;
wobei das Energieübertragungssystem eine erste Schaltübergabevorrichtung an einem ersten Ende der ersten und zweiten Polleitung (L1, L2), eine zweite Schaltübergabevorrichtung an einem zweiten Ende der ersten und zweiten Polleitung (L1, L2), eine dritte Schaltübergabevorrichtung an einem ersten Ende der dritten Polleitung (L3) und eine vierte Schalterübergabevorrichtung an einem zweiten Ende der dritten Polleitung (L3) aufweist, wobei die Schalterübergabevorrichtungen Thyristor-Wurfunterbrechungsschalter oder Schaltvorrichtungen auf der Basis von abschaltbaren, leistungselektronischen Vorrichtungen sind, die eingerichtet sind, um Spannungspolaritäten der ersten, zweiten und dritten Polleitung umzukehren;
wobei das erste Wellenform-Umwandlungssystem einen Wechselstromtransformator, einen positiv polaren Spannungswandler (VSC1), einen negativ polaren Spannungswandler (VSC2) und die erste Schalterübergabevorrichtung aufweist; wobei entsprechende Eingangsenden des positiven und des negativen polaren Spannungswandlers (VSC1, VSC2) angepasst sind, um mit einem ersten Wechselstromsystem über den Wechselstromtransformator verbunden zu werden;
wobei die positive Elektrode eines Gleichstrom-Klemmkondensators (C1) des positiv polaren Spannungswandlers (VSC1) mit einem ersten Eingangsende der ersten Schaltübergabevorrichtung verbunden ist, während die negative Elektrode des Gleichstrom-Klemmkondensators (C1) des positiv polaren Spannungswandlers (VSC1) geerdet ist; die negative Elektrode des Gleichstrom-Klemmkondensators (C2) des negativ polaren Spannungswandlers (VSC2) mit einem zweiten Eingangsende der ersten Schaltübergabevorrichtung verbunden ist, während die positive Elektrode des Gleichstrom-Klemmkondensators (C2) des negativ polaren Spannungswandlers (VSC2) geerdet ist; und entsprechende Ausgangsenden des positiv polaren Spannungswandlers (VSC1) und des negativ polaren Spannungswandlers (VSC2) separat über die erste Schalterübergabevorrichtung und die erste und zweite Polleitung (L1, L2) mit der zweiten Schalterübergabevorrichtung des zweiten Wellenform-Umwandlungssystems verbunden sind.

2. Energieübertragungssystem nach Anspruch 1, **dadurch gekennzeichnet, dass** das zweite Wellenform-Umwandlungssystem die zweite Schaltübergabevorrichtung, einen positiv polaren Spannungswandler (VSC1'), einen negativ polaren Spannungswandler (VSC2') und einen Wechselstromtransformator aufweist; die positive Elektrode eines Gleichstrom-Klemmkondensators (C1') des positiv polaren Spannungswandlers (VSC1') mit einem ersten Ausgangsende der zweiten Schaltübergabevorrichtung verbunden ist, während die negative Elektrode von diesem Gleichstrom-Klemmkondensator (C1') geerdet ist; die negative Elektrode eines Gleichstrom-Klemmkondensators (C2') des negativ polaren Spannungswandlers (VSC2') mit einem zweiten Ausgangsende der zweiten Schaltübergabevorrichtung verbunden ist, während die positive Elektrode dieses Gleichstrom-Klemmkondensators (C2') geerdet ist; und entsprechende Ausgangsenden des positiv polaren Spannungswandlers (VSC1') und des negativ polaren Spannungswandlers (VSC2') des zweiten Wellenform-Umwandlungssystems eingerichtet sind, um separat mit einem zweiten Wechselstromsystem über den Wechselstromtransformator verbunden zu werden.

3. Energieübertragungssystem nach Anspruch 1, **dadurch gekennzeichnet, dass** das dritte Wellenform-Umwandlungssystem einen Wechselstromtransformator, einen dritten polaren Spannungswandler (VSC3) und die dritte Schalterübergabevorrichtung aufweist; ein Eingangsende des dritten polaren Spannungswandlers (VSC3) eingerichtet ist, mit dem ersten Wechselstromsystem über den Wechselstromtransformator verbunden zu werden, die positive Elektrode eines Gleichstrom-Klemmkondensators (C3) des dritten polaren Spannungswandlers (VSC3) mit einem ersten Eingangsende der dritten Schaltübergabevorrichtung verbunden ist und ein Ausgangsende des dritten polaren Spannungswandlers (VSC3) mit der vierten Schaltübergabevorrichtung des vierten Wellenform-Umwandlungssystems über die dritte Polleitung (L3) verbunden ist.

**4.** Energieübertragungssystem nach Anspruch 3, **dadurch gekennzeichnet, dass** das vierte Wellenform-Umwandlungssystem die vierte Schaltübergabevorrichtung, einen vierten polaren Spannungswandler (VSC3') und einen Wechselstromtransformator aufweist; die positive Elektrode eines Gleichstrom-Klemmkondensators (C3') des vierten polaren Spannungswandlers (VSC3') mit einem Ausgangsende der vierten Schaltübergabevorrichtung verbunden ist und ein Ausgangsende des vierten polaren Spannungswandlers (VSC3') eingerichtet ist, um mit dem zweiten Wechselstromsystem über den Wechselstromtransformator verbunden zu werden.

**5.** Energieübertragungssystem nach Anspruch 1, **dadurch gekennzeichnet, dass** die erste Polleitung (L1), die zweite Polleitung (L2) und die dritte Polleitung (L3) Freileitungen oder Kabelleitungen sind.

**6.** Energieübertragungssystem nach Anspruch 4, **dadurch gekennzeichnet, dass** die positiv polaren Spannungswandler (VSC1 und VSC1'), die negativ polaren Spannungswandler (VSC2 und VSC2') des ersten und zweiten Wellenform-Umwandlungssystems und der dritte und vierte polare Spannungswandler (VSC3 und VSC3') Spannungswandler auf der Basis von abschaltbaren leistungselektronischen Vorrichtungen sind.

**7.** Energieübertragungssystem nach Anspruch 1, **dadurch gekennzeichnet, dass** gemäß einer Situation eines Stromnetzes in der Leitungsflussrichtung das zweite Wellenform-Umwandlungssystem und das vierte Wellenform-Umwandlungssystem eingerichtet sind, eine Sinuswelle in eine alternierende Rechteckwelle zu wandeln, und das erste Wellenform-Umwandlungssystem und das dritte Wellenform-Umwandlungssystem eingerichtet sind, die alternierende Rechteckwelle in eine Sinuswelle zu wandeln, um so eine Energieübertragung von dem zweiten Wechselstromsystem zu dem ersten Wechselstromsystem zu vervollständigen.

## Revendications

**1.** Système de transmission d'énergie pour l'amélioration de la capacité d'une transmission de courant alternatif non sinusoïdal dans un réseau électrique urbain,

le système de transmission d'énergie comprenant un premier système de conversion de forme d'onde et un troisième système de conversion de forme d'onde pour convertir une onde sinusoïdale en une onde carrée alternative, et un deuxième système de conversion de forme d'onde et un quatrième système de conversion de forme d'onde pour convertir l'onde carrée alternative en une onde sinusoïdale,

dans lequel le premier système de conversion de forme d'onde est connecté au deuxième système de conversion de forme d'onde via un premier conducteur polaire (L1) et un deuxième conducteur polaire (L2) ; et le troisième système de conversion de forme d'onde est connecté au quatrième système de conversion de forme d'onde via un troisième conducteur polaire (L3) ;

le système de transmission d'énergie comprend un premier dispositif de transfert de commutation à une première borne des premier et deuxième conducteurs polaires (L1, L2), un deuxième dispositif de transfert de commutation à une seconde borne des premier et deuxième conducteurs polaires (L1, L2), un troisième dispositif de transfert de commutation à une première borne du troisième conducteur polaire (L3), et un quatrième dispositif de transfert de commutation à une seconde borne du troisième conducteur polaire (L3), dans lequel les dispositifs de transfert de commutation sont des commutateurs de type « fling-cut » à thyristors ou des dispositifs de commutation basés sur des dispositifs électroniques de puissance à coupure configurés pour inverser les polarités de tension des premier, deuxième et troisième conducteurs polaires ;

dans lequel le premier système de conversion de forme d'onde comprend un transformateur de courant alternatif, un convertisseur de tension polaire positive (VSC1), un convertisseur de tension polaire négative (VSC2) et le premier dispositif de transfert de commutation ; dans lequel des bornes d'entrée respectives des convertisseurs de tension polaire positive et négative (VSC1, VSC2) sont adaptées pour être connectées à un premier système à courant alternatif via le transformateur de courant alternatif ;

dans lequel l'électrode positive d'un condensateur de fixation de courant continu (C1) du convertisseur de tension polaire positive (VSC1) est connectée à une première borne d'entrée du premier dispositif de transfert de commutation, tandis que l'électrode négative du condensateur de fixation de courant continu (C1) du convertisseur de tension polaire positive (VSC1) est mise à la masse ; l'électrode négative d'un condensateur de fixation de courant continu (C2) du convertisseur de tension polaire négative (VSC2) est connectée à une seconde borne d'entrée du premier dispositif de transfert de commutation, tandis que l'électrode positive du condensateur de fixation de courant continu (C2) du convertisseur de tension polaire négative (VSC2) est mise à la masse ;

et des bornes de sortie respectives du convertisseur de tension polaire positive (VSC1) et du convertisseur de tension polaire négative (VSC2) sont séparément connectées via le premier dispositif de transfert de commutation et les premier et deuxième conducteurs polaires (L1, L2) au deuxième dispositif de transfert de commutation du deuxième système de conversion de forme d'onde.

2. Système de transmission d'énergie selon la revendication 1, **caractérisé en ce que** le deuxième système de conversion de forme d'onde comprend le deuxième dispositif de transfert de commutation, un convertisseur de tension polaire positive (VSC1'), un convertisseur de tension polaire négative (VSC2') et un transformateur de courant alternatif ; l'électrode positive d'un condensateur de fixation de courant continu (C1') du convertisseur de tension polaire positive (VSC1') est connectée à une première borne de sortie du deuxième dispositif de transfert de commutation, tandis que l'électrode négative de ce condensateur de fixation de courant continu (C1') est mise à la masse ; l'électrode négative d'un condensateur de fixation de courant continu (C2') du convertisseur de tension polaire négative (VSC2') est connectée à une seconde borne de sortie du deuxième dispositif de transfert de commutation, tandis que l'électrode positive de ce condensateur de fixation de courant continu (C2') est mise à la masse ;
et des bornes de sortie respectives du convertisseur de tension polaire positive (VSC1') et du convertisseur de tension polaire négative (VSC2') du deuxième système de conversion de forme d'onde sont agencées pour être séparément connectées à un second système à courant alternatif via le transformateur de courant alternatif.

3. Système de transmission d'énergie selon la revendication 1, **caractérisé en ce que** le troisième système de conversion de forme d'onde comprend un transformateur de courant alternatif, un troisième convertisseur de tension polaire (VSC3) et le troisième dispositif de transfert de commutation ; une borne d'entrée du troisième convertisseur de tension polaire (VSC3) est agencée pour être connectée au premier système à courant alternatif via le transformateur de courant alternatif, l'électrode positive d'un condensateur de fixation de courant continu (C3) du troisième convertisseur de tension polaire (VSC3) est connectée à une première borne d'entrée du troisième dispositif de transfert de commutation, et une borne de sortie du troisième convertisseur de tension polaire (VSC3) est connectée au quatrième dispositif de transfert de commutation du quatrième système de conversion de forme d'onde via le troisième conducteur polaire (L3).

4. Système de transmission d'énergie selon la revendication 3, **caractérisé en ce que** le quatrième système de conversion de forme d'onde comprend le quatrième dispositif de transfert de commutation, un quatrième convertisseur de tension polaire (VSC3') et un transformateur de courant alternatif ; l'électrode positive d'un condensateur de fixation de courant continu (C3') du quatrième convertisseur de tension polaire (VSC3') est connectée à une borne de sortie du quatrième dispositif de transfert de commutation, et une borne de sortie du quatrième convertisseur de tension polaire (VSC3') est agencée pour être connectée au second système à courant alternatif via le transformateur de courant alternatif.

5. Système de transmission d'énergie selon la revendication 1, **caractérisé en ce que** le premier conducteur polaire (L1), le deuxième conducteur polaire (L2) et le troisième conducteur polaire (L3) sont tous des lignes aériennes ou des lignes de câble.

6. Système de transmission d'énergie selon la revendication 4, **caractérisé en ce que** les convertisseurs de tension polaire positive (VSC1 et VSC1'), les convertisseurs de tension polaire négative (VSC2 et VSC2') des premier et deuxième systèmes de conversion de forme d'onde, et les troisième et quatrième convertisseurs de tension polaire (VSC3 et VSC3') sont des convertisseurs de tension basés sur des dispositifs électroniques de puissance à coupure.

7. Système de transmission d'énergie selon la revendication 1, **caractérisé en ce que** selon une situation du réseau électrique, dans la direction de circulation de ligne, le deuxième système de conversion de forme d'onde et le quatrième système de conversion de forme d'onde sont configurés pour convertir une onde sinusoïdale en une onde carrée alternative, et le premier système de conversion de forme d'onde et le troisième système de conversion de forme d'onde sont configurés pour convertir l'onde carrée alternative en une onde sinusoïdale, ce qui achève ainsi la transmission d'énergie du second système à courant alternatif au premier système à courant alternatif.

Fig. 1

first waveform conversion system

second waveform conversion system

first polar lead +/-

L1

sedond polar lead +/-

L2

third polar lead +/-

L3

first alternating current system

second alternating current system

alternating current transformer

positive polar voltage converter $VSC1$

$C1$

switch handover device

switch handover device

$C1'$

positive polar voltage converter $VSC1'$

alternating current transformer

alternating current transformer

$C2$

negative polar voltage converter $VSC2$

$C2'$

negative polar voltage converter $VSC2'$

alternating current transformer

alternating current transformer

$C3$

third polar voltage converter $VSC3$

switch handover device

switch handover device

$C3'$

fourth polar voltage converter $VSC3'$

alternating current transformer

third waveform conversion system

fourth waveform conversion system

Fig. 2

voltage converter

+

−

1

$4'$

3

$SW1$

$SW1'$

$3'$

4

2

switch handover device

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102738820 B
- CN 103219738 A
- CN 102738819 B